**Europäisches Patentamt**

**European Patent Office**

**Office européen des brevets**

(19)

(11) Veröffentlichungsnummer: **0 027 548**
**B1**

(12) # EUROPÄISCHE PATENTSCHRIFT

(45) Veröffentlichungstag der Patentschrift:
**09.05.84**

(51) Int. Cl.³: **D 06 B 19/00,** D 06 B 1/14

(21) Anmeldenummer: **80105509.6**

(22) Anmeldetag: **13.09.80**

(54) **Verfahren und Vorrichtung zum Tränken von Verstärkungsmaterialien mit einem harzförmigen Bindemittel.**

(30) Priorität: **23.10.79 DE 2942729**

(43) Veröffentlichungstag der Anmeldung:
**29.04.81 Patentblatt 81/17**

(45) Bekanntmachung des Hinweises auf die Patenterteilung:
**09.05.84 Patentblatt 84/19**

(84) Benannte Vertragsstaaten:
**FR GB IT**

(56) Entgegenhaltungen:
**CH - A - 264 271**
**DE - C - 860 186**
**FR - A - 1 395 920**
**FR - A - 2 184 194**

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Döllinger, Rolf, Birkensteiner Strasse 58,
D-8165 Fischbachau (DE)**
Erfinder: **Schindler, Rudolf, Albrecht-Dürer-Strasse 1,
D-8014 Neubiberg (DE)**

**Beschreibung**

Die Erfindung betrifft ein Verfahren zum Imprägnieren von Verstärkungsmaterialien, wie Rovings, Vliese, Bänder oder Gewebe mit einem harzförmigen Bindemittel für die Herstellung von faserverstärkten Werkstoffen, wobei das Verstärkungsmaterial einseitig über eine teilweise in ein Bindemittelbad eintauchende drehbare Tränkwalze geführt wird und dabei einen Bindemittelüberschuss erhält, und eine Vorrichtung zur Durchführung des Verfahrens.

Ein derartiges Verfahren sowie die zugehörige Vorrichtung sind bereits aus der DE-B-2 012 107 bekannt. Bei diesem Verfahren wird der Grad der Beaufschlagung des Verstärkungsmaterials mit Bindemittel durch Veränderung des Verhältnisses der Umfangsgeschwindigkeit der Tränkrolle zur Laufgeschwindigkeit des Verstärkungsmaterials eingestellt. Überschüssiges Harz kann durch Abstreifleisten oder Quetschwalzen entfernt werden.

Obwohl nach dem bekannten Verfahren in einem einzigen Arbeitsgang das Bindemittel mit einem genau einstellbaren Verhältnis von Bindemittel zu Verstärkungsmaterial kontinuierlich aufgebracht werden kann, ist die erzielte Imprägnierung nicht optimal. Dies zeigt sich beispielsweise, wenn nach dem bekannten Verfahren hergestellte Rovings im Kauschenbereich der Hauptrotorblätter eines Hubschraubers eingesetzt werden. Die Rovings erleiden in dem hochbelasteten Blattwurzelbereich schon bei relativ niedrigen Lastspielen ein frühzeitiges Schubversagen. Der Bruch tritt von den ersten Versagensanzeigen an innerhalb weniger tausend Lastspiele schlagartig ein. Der Trennbruch ergibt zwar das Bild eines Zugbruchversagens der Glasfaser, resultiert jedoch aus Schubeinrissen.

Die der Erfindung zugrunde liegende Aufgabe besteht deshalb darin, ein Verfahren und eine Vorrichtung zum Imprägnieren von Verstärkungsmaterialien der eingangs genannten Art zu schaffen, die ein optimales Eindringen des harzförmigen Bindemittels in das Verstärkungsmaterial ermöglichen und die daher den daraus hergestellten faserverstärkten Werkstoffen eine wesentlich verbesserte dynamische Festigkeit geben.

Diese Aufgabe wird erfindungsgemäss gelöst durch die Verfahrensmerkmale des Anspruchs 1 und durch die Vorrichtungsmerkmale des Anspruchs 4. Weiterbildungen des Verfahrens sind in den Ansprüchen 2 und 3 und diejenigen der Vorrichtung im Anspruch 5 enthalten.

Es hat sich gezeigt, dass bei dem Imprägnieren der Verstärkungsmaterialien in der erfindungsgemässen Weise das aufgebrachte harzförmige Bindemittel von der Aufbringseite her durch das Verstärkungsmaterial «hindurchschwitzt», wobei Lufteinschlüsse auf der gegenüberliegenden Seite nach aussen gedrückt und aus dem Verstärkungsmaterial entfernt werden. Dadurch ergibt sich ein homogen durchtränktes Verstärkungsmaterial, das keine Schwachstellen aufgrund von nicht entfernten Luft- oder Gaseinschlüssen aufweist. Dieser Prozess des Beseitigens von Luft-und Gaseinschlüssen findet in der Bindemittel-Aufsaugzone statt. Das darin im wesentlichen vollständig gesättigte Verstärkungsmaterial wird dann aus dieser Zone abgezogen und zum Entfernen von überschüssigem Bindemittel durch eine Walkstation geführt, an die sich eine Kalibrierdüsenstation und weitere Behandlungs- und Verarbeitungsstationen anschliessen können.

Der in der erfindungsgemässen Weise getränkte Roving hat ein grünes, glasartig transparentes Erscheinungsbild, während ein nach dem bekannten Verfahren getränkter Roving mit Lufteinschlüssen weisslich-transluzent ist. Wenn aus den erfindungsgemäss getränkten Rovings mittels einer Laminierform Hauptrotorblätter für einen Hubschrauber hergestellt werden, zeigt sich, dass diese Blätter eine hohe dynamische Festigkeit haben und bei Lastspielen von $5 \times 10^5$ und mehr kein Lastabfall registriert werden kann.

Bei Verwendung von warm- oder heisshärtenden Harz-Härter-Systemen, insbesondere bei Expoxy-Harz-Systemen, wird ein optimales Imprägnieren von Endlosrovings dann erreicht, wenn in der Harzaufsaugzone eine Temperatur zwischen 30 und 150 °C aufrechterhalten wird, wobei die Verweilzeit in dieser Zone 30 bis 120 s betragen soll. Dabei beträgt die Abzugsgeschwindigkeit 0,2 bis 0,5 m/s. Der Filamentdurchmesser des Glasmaterials liegt zweckmässigerweise zwischen 5 µm bis 15 µm, wobei die ungetwisteten Glasseidenrovings ein Metergewicht von 600 bis 2400 tex haben.

Das erfindungsgemässe Verfahren lässt sich vorteilhaft mit einer Vorrichtung durchführen, bei der das Verstärkungsmaterial mit einer Seite über eine Tränkwalze geführt wird, die in das Bad aus harzförmigem Bindemittel eintaucht. Die dadurch mit Harz getränkten Verstärkungsmaterialien werden dann in die Harzaufsaugzone eingeführt, die aus einer turmartigen Kammer besteht, in der aufeinanderfolgend oben und unten Führungswalzen angeordnet sind, über die das Verstärkungsmaterial geführt und abschliessend aus der Kammer über eine Walkstrecke mit einstellbarer Geschwindigkeit abgezogen wird. In der Kammer befindet sich ein Gebläse, mit dessen Hilfe die Luft in der Kammer umgewälzt wird. Die Luft wird mittels einer Heizeinrichtung erwärmt, so dass in der Kammer die gewünschte Temperatur eingestellt werden kann. Durch das Aufbiegen des Verstärkungsmaterials beim Umlenken um die Führungswalzen werden das Durchtränken des Materials und das Entfernen von Lufteinschlüssen begünstigt. Die im Abstand am Umfang der Führungswalzen verteilten achsparallelen Nuten ermöglichen einen glatten Lauf des Verstärkungsmaterials und verhindern ein Aufwickeln von sich aus dem Verstärkungsmaterial abtrennenden Elementarfäden auf den jeweiligen Führungswalzen.

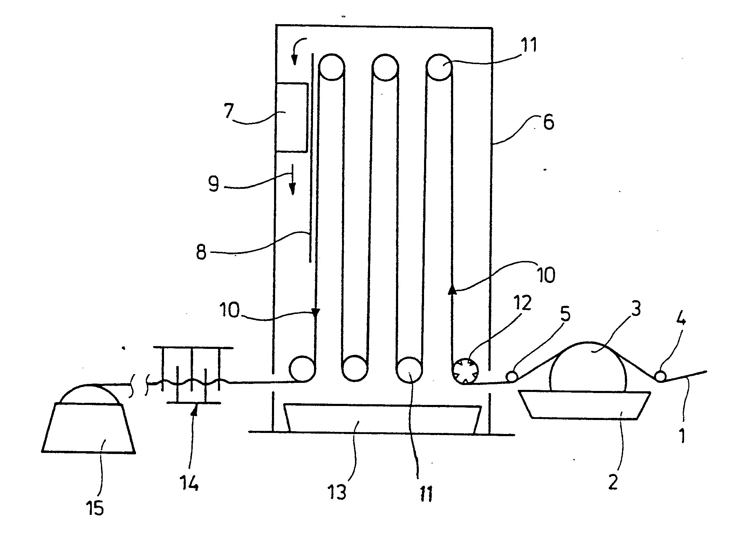

Anhand der Zeichnung, die eine Ausführungsform einer erfindungsgemässen Vorrichtung zeigt, wird die Erfindung näher erläutert.

Das Verstärkungsmaterial 1, das beispielsweise aus mehreren nebeneinander berührungsfrei geführten Glasrovings bestehen kann, wird von einer nicht gezeigten Abzugseinrichtung, beispielsweise einem Zettelbaum, abgezogen. Das Verstärkungsmaterial wird zunächst unter einer Einführrolle 4 hindurch auf eine Tränkwalze 3 und dann wieder unter einer Auslaufrolle 5 hindurch in eine turmartige Kammer 6 geführt. Die Tränkwalze 3 ist drehbar und taucht mit einem Teil ihrer Umfangsfläche in ein Bad 2 aus harzförmigem Bindemittel ein. Durch die Drehung wird dieses Bindemittel in gewünschter Menge auf die Unterseite des über die Tränkrolle 3 laufenden Verstärkungsmaterials 1 übertragen und in die turmartige Kammer 6 mitgeführt.

In der Kammer 6 ist im unteren Bereich eine erste Führungswalze 11 angeordnet, die das Verstärkungsmaterial 1 umlenkt und nach oben zu einer oberen Führungswalze 11 führt, von der aus dann das Verstärkungsmaterial 1 wieder zu einer unteren, anschliessend wieder zu einer oberen, dann wieder zu einer unteren, einer oberen und einer unteren Führungswalze geführt wird, ehe es aus der Kammer 6 austritt. Die Durchlaufrichtung des Verstärkungsmaterials 1 durch die Kammer 6 ist durch die Pfeile 10 gekennzeichnet. Die Anzahl der Führungswalzenanordnung, die als kalanderartig bezeichnet werden kann, wird so gewählt, dass abhängig von der Laufgeschwindigkeit des Verstärkungsmaterials 1 die gewünschte Verweilzeit in der Kammer 6 erreicht wird. Eine Führungswand 8 innerhalb der Kammer 6 sorgt für die Führung des durch die Pfeile 9 gezeigten Luftstroms durch ein Gebläse 7, so dass in der Kammer 6 eine Luftumwälzung stattfindet. Die Luft wird mittels einer Heizeinrichtung auf einer gewünschten Temperatur gehalten, so dass die Temperatur in der Kammer 6 annähernd konstant ist. Bei dieser Temperatur wird die gewünschte Viskosität des auf das Verstärkungsmaterial 1 aufgetragenen harzförmigen Bindemittels gewährleistet, so dass das Bindemittel von der Auftragseite her durch das Verstärkungsmaterial 1 zur gegenüberliegenden Seite hin «durchschwitzen» kann, was durch die Umlenkung des Verstärkungsmaterials 1 um die Führungswalzen 11 noch begünstigt wird. Die in den Führungswalzen 11 am Umfang im Abstand vorgesehenen achsparallelen Nuten 12 verhindern einerseits das Aufwickeln von Einzelfilamenten aus dem Verstärkungsmaterial 1 auf der entsprechenden Führungswalze 11. Ausserdem kann sich an den Nuten 12 Bindemittel absetzen, so dass ein glatter Lauf des Verstärkungsmaterials 1 über die Führungswalzen 11 gewährleistet ist.

Das aus der turmartigen Kammer 6 mit den kalanderartig angeordneten Führungswalzen 11 abgezogene Verstärkungsmaterial 1 wird durch eine Walkstrecke 14 geführt, in der überschüssiges Harz abgestreift wird. Hinter der Walkstrecke 14 kann das Verstärkungsmaterial 1 einer Station mit nicht gezeigten Kalibrierdüsen und anderen Weiterverarbeitungsstationen zugeführt werden, bis das imprägnierte Verstärkungsmaterial 1 mit einer Abzugseinrichtung 15 zur weiteren Verarbeitung herausgezogen wird.

Als Verstärkungsmaterial eignen sich besonders Rovings von Fasern aus Glas, Kohle oder aromatischen Polyamiden.

Anhand der nachstehenden Beispiele wird die Erfindung weiter erläutert.

Beispiel 1

18 Rovings aus nicht getwisteten Glasseidenmonofilamenten mit einem Durchmesser von 9 µm werden zu einer Zettelbaumcharge zusammengefasst. Sie haben eine Temperatur von 50 bis 60 °C und befinden sich in einer Atmosphäre mit einer relativen Feuchte von 40 bis 70%. Die vom Zettelbaum abgezogenen Rovings laufen einzeln über eine Tränkwalze 3, die in ein Bad aus harzförmigem Bindemittel in der Wanne 2 eintaucht. Als Harz wird ein Kondensationsprodukt aus EPIChlorhydrin und 4,4-Diphenylolpropan, das frei von Zusätzen, wie Lösungsmitteln, Verdünnern usw. ist, verwendet. Die chemische Basis des Härters ist 4,4-Diaminodiphenylmethan. Das Harz-Härter-Mischverhältnis beträgt 100 : 27 Gewichtsteile. Die Badtemperatur beträgt 49 bis 50 °C, die Viskosität des aus dem Harz-Härter-System bestehenden Bades liegt bei 200 bis 500 mPas.

Die Tränkwalze 3 trägt aus dem Bad einen Harzfilm definierter Stärke aus, mit dem die Glasrovings auf der Kontaktseite mit der Tränkwalze 3 imprägniert werden. Der Harzüberschuss der getränkten Rovings beträgt beim Verlassen der Tränkwalze 3 20 bis 40 Gew.-%. Die einseitig beschichteten Rovings 1 werden in die Kammer 6 mit einer Laufgeschwindigkeit von 13 m/s eingeführt. In der Kammer 6 sind, wie in der Zeichnung dargestellt ist, sieben Führungswalzen vorgesehen. Der Sättigungsgrad des Harz-Härter-Systems beträgt beim Einführen in die Kammer 6 noch 120 bis 140%. In der Kammer 6 werden die das Verstärkungsmaterial 1 bildenden Rovings einzeln nebeneinander geführt, so dass das Harz von der Beschichtungsseite aus durch den jeweiligen Roving hindurchschwitzen kann. Aufgrund der in der Kammer 6 eingestellten erhöhten Temperatur von 50 bis 60 °C und der konstanten Laufgeschwindigkeit wird der Stoffaustausch optimal begünstigt. Die für die Temperaturkonstanthaltung umgewälzte erwärmte Luft ist trocken, um gelöste Gase in Lösung zu halten.

Der Abstand zwischen einer unteren und einer oberen Führungswalze beträgt 1,5 bis 2 m. Der Führungswalzendurchmesser liegt bei 120 mm. Die achsparallelen Nuten in den Führungswalzen 11 haben eine Tiefe und eine Breite von jeweils 4 mm. Die Gesamtlänge des in der Kammer 6 befindlichen Rovings liegt bei etwa 10 m, so dass die Verweilzeit 45 bis 50 s beträgt.

Nach dem Durchlauf der Rovings durch die Kammer 6 ist die Imprägnierung abgeschlossen. In einem Abstand von etwa 0,5 m nach der Kammer 6 ist eine Walkstrecke zum Einstellen des exakten Harzanteils vorgesehen. Wenn ein Glasgewichtsanteil von 73,4 Gew.-% angestrebt wird, muss ein Harzvolumenanteil von 42% erreicht werden. Das ausgewalzte überschüssige Bindemittel tropft nach unten in einen Sammelbehälter, von dem aus es zurück in die Wanne 2 geführt werden kann. An die Walkstrecke 14 schliesst sich in einer Entfernung von 0,5 m eine Kalibrierdüse zur Erzielung des gewünschten Bandquerschnittes von 0,8 × 20 mm an. Die so kalibrierten Rovingbänder werden auf eine Länge von 10 m abgezogen und abgeschnitten. Dabei wird ein 20 cm langes Rovingstück abgetrennt und auf einer Präzisionswaage gewogen. Abhängig von dem Wiegeergebnis werden die Walkstifte zur Einstellung des Verhältnisses von Harz zu Rovingmaterial justiert.

Der so hergestellte Roving hat ein glasartigtransparentes Aussehen und wird in die Laminierformhälfte zur Herstellung eines Rotorblattes eingelegt und einmal mit einem Spatel anmassiert. Er erhält ein grünlich transparentes Aussehen. Die auf diese Weise hergestellten Rotorblätter können dynamisch mit Lastspielzahlen bis etwa $5 \times 10^6$ beansprucht werden, ohne dass sich Schäden einstellen. Bei Rotorblättern aus nach bekannten Verfahren imprägnierten Rovings lassen sich Lastspielzahlen von höchstens $0,02 \times 10^6$ erreichen. Es zeigt sich, dass Differenzen in der Ziehgeschwindigkeit bzw. Laufgeschwindigkeit des Verstärkungsmaterials 1 keinen nachteiligen Einfluss auf die optimale Imprägnierung haben. Bei den bekannten Imprägnierverfahren muss die Abzugsgeschwindigkeit genau eingehalten werden.

Beispiel 2

Zur Herstellung eines Rovingbandes aus einer aromatischen Polyamidfaser mit Polyrethanharzmatrix für ein Zugelement werden Spulen mit aromatischen Polyamidfasern zu einer Zettelbaumcharge zusammengefässt. Das Garn mit 1420 dtex ist ohne Haftvermittler. Die Polyamidfaserspulen werden vor dem Einsatz zehn Stunden lang bei einer relativen Feuchte von 10 bis 30% auf einer Temperatur von 110 bis 130 °C gehalten. Die nicht getwisteten Garne werden von dem Zettelbaum abgezogen und laufen wie bei Beispiel 1 über die Tränkwalze. Das Bad besteht aus einem Polyurethanharz-Härter-System, das bei einer Temperatur zwischen 25 und 30 °C eine Viskosität von 100 bis 150 mPas hat. Das Harz ist ein Diisocyanat. Zur Vermeidung exothermer Reaktionen überschreitet die Gesamtharzmenge 1 kg nicht.

Das Garn aus Polyamidfasern durchläuft die Kammer 6, deren Innentemperatur auf $30 \pm 2\,°C$ gehalten wird. Die übrigen Massnahmen entsprechen denen von Beispiel 1. Das erhaltene Rovingband hat eine homogene optimale Harzimprägnierung, die im wesentlichen von Lufteinschlüssen frei ist. Das aus solchen Rovingbändern hergestellte Zugelement ist sehr hoch belastbar.

Beispiel 3

Zehn Spulen einer hochfesten Kohlefaser werden zu einer Zettelbaumcharge zusammengefasst. Der Querschnitt eines Faserbündels beträgt 0,2 mm². Die Kohlefaserspulen werden auf dem Zettelbaum 5 h lang auf einer Temperatur von 90 bis 100 °C gehalten, wobei die relative Luftfeuchtigkeit zwischen 30 und 50% liegt. Die Kohlefasergarne, die nicht getwistet sind, werden anschliessend von dem Zettelbaum abgezogen und über die Tränkwalze 3 geführt. In der Wanne 2 befindet sich ein Polyimidharz, das auf einer Temperatur von 125 bis 130 °C gehalten wird. Um das duroplastische Einkomponentenharz in Lösung zu halten, müssen sämtliche Führungselemente und Walzen vorgeheizt werden. Das Harz ist sehr dünnflüssig, die kinematische Zähigkeit beträgt 1 bis 1,5 cm²/s. Diese Viskosität wird während der Verarbeitungszeit beibehalten. Die Kohlefasern werden wie die Rovingfasern nach Beispiel 1 getränkt und durch die Kammer 6 geführt, wobei die Temperatur der Führungswalzen 11 auf 125 bis 130 °C gehalten wird, während die Temperatur der in der Kammer 6 umgewälzten Luft auf 140 bis 160 °C gehalten wird. Es stellt sich eine vollständige Durchdringung der Kohlenfasergarne mit dem Harz ein. Zum Ausgleich von Wärmeverlusten sind in Laufrichtung der Kohlefasern vor und hinter der Kammer 6 wärmezuführende Infrarotstrahlerbatterien vorgesehen.

Die erhaltenen Rovingbänder eignen sich für die Herstellung von sog. «Advanced Rotorblades» sowie von Turbinenschaufeln.

Beispiel 4

Imprägnierung von Glasgewebeband für die Herstellung der Deckhäute von langgestreckten Bauteilen mit definierter Torsionssteifigkeit.

Verwendet wird eine Glasseidengewebespule, welche eine Breite hat, die der Breite des Bauteils entspricht. Zur Erhöhung der Torsionssteifigkeit wird ein Spezialgewebe verwendet mit einer, zur Abzugsrichtung gesehen, $\pm$ 45°-Orientierung der Glasfaser, wobei die verschieden orientierten Glasfasern entweder eine gewisse Verknüpfung aufweisen oder – nur mit Heftfaden verbunden – ohne Verknüpfung aufeinander liegen.

Das Flächengewicht des Glasseidengewebes kann zwischen etwa 50 und 500 g/m² liegen.

Die Glasgewebespule ist vorgeheizt auf 60 °C, bei einer relativen Luftfeuchtigkeit von 50–70%.

Alle weiteren Verarbeitungsparameter sind aus dem Beispiel Nr. 1 zu entnehmen.

Das Glasgeweband wird ebenso wie Rovings durch den gesamten Tränkturm hindurchgeführt. Zu beachten ist bei Verwendung eines $\pm$45°-Gewebes, dass in Abzugsrichtung ebenfalls Fäden angeordnet sein müssen, um den sog. «Krawatten-Effekt» zu verhindern. (Selbstverständlich können alle Gewebetypen in Kett- oder Schussrichtung abgezogen und imprägniert werden.)

Nachdem das Gewebeband den Tränkturm verlassen hat, ist die Impränigerung abgeschlossen. Nach dem Tränkturm wird die Lage des imprägnierten Gewebebandes mit Hilfe von Umlenkelementen um rund 90° geneigt.

Etwa 1 m nach dem Tränkturm ist eine Walkstrecke aufgebaut. Diese Walkstrecke dient zum Einstellen des exakt gewünschten Harzanteils. Wesentlich ist auch hierbei, dass das Entfernen des überschüssigen Harz-Härter-Anteils erst nach Beendigung des Imprägniervorganges vorgenommen wird.

Mit diesem Verfahren können imprägnierte Gewebe mit folgendem Vorteil hergestellt werden: Das imprägnierte Gewebe hat ein glasartig transparentes Erscheinungsbild. Demgegenüber ist ein Gewebe-Prepreg, welches von den bekannten Prepreg-Herstellern vertrieben wird, weisslich-transluzent. Das weisslich-transluzente Aussehen kommt durch eine ungenügende bzw. fehlerhafte Tränkung zustande. Die Nachteile, hauptsächlich hinsichtlich der mechanischen Eigenschaften, sind bekannt.

Der gewünschte Soll-Glasgewichtsanteil von 50% ist sehr leicht erreichbar und konstant zu halten.

Bei einer Serienproduktion von Bauteilen ist die Herstellung von Blatthäuten bedeutend weniger lohnintensiv als bei der bisher angewandten Imprägnier-Methode von Hand.

**Patentansprüche**

1. Verfahren zum Imprägnieren von Verstärkungsmaterialien, wie Rovings, Vliese, Bänder oder Gewebe, mit einem harzförmigen Bindemittel für die Herstellung von faserverstärkten Werkstoffen, wobei das Verstärkungsmaterial einseitig über eine teilweise in ein Bindemittelbad eintauchende drehbare Tränkwalze geführt wird und dabei einen Bindemittelüberschuss erhält, dadurch gekennzeichnet, dass das mit einem Bindemittelüberschuss von 20 bis 40 Gew.-% von der Tränkwalze kommende Verstärkungsmaterial durch eine Bindemittel-Aufsaugzone geleitet wird, in welcher zur Aufrechterhaltung einer bestimmten Viskosität des Bindemittels erwärmte Luft umgewälzt wird und in welcher das Verstärkungsmaterial durch eine Mehrzahl von in zwei Ebenen übereinanderliegenden Führungswalzen umgelenkt wird, und dass das Verstärkungsmaterial nach Verlassen der Bindemittel-Aufsaugzone über eine Walkstrecke, in der überschüssiges Bindemittel abtropft, geführt wird.

2. Verfahren nach Anspruch 1, dadurch gekennzeichnet, dass bei Verwendung von Glasseidenrovings von 600 bis 2400 tex und einem Durchmesser von 5 bis 15 µm als Bindemittel ein warm- oder heisshärtendes Harz-Härter-System aufgetragen wird und die Verweilzeit in der Bindemittel-Aufsaugzone 30 bis 120 s bei einer Temperatur von 30 bis 150 °C beträgt.

3. Verfahren nach Anspruch 1, dadurch gekennzeichnet, dass das vollständig imprägnierte Verstärkungsmaterial nach dem Austreten aus der Bindemittel-Aufsaugzone aus der horizontalen in eine vertikale Lage umgelenkt wird.

4. Vorrichtung zur Durchführung des Verfahrens nach einem der vorhergehenden Ansprüche mit einer Wanne für das Bindemittelbad mit einer mit ihrem unteren Teil in das Bad eintauchenden, drehbaren Tränkwalze, der Einlauf- und Auslaufmittel zugeordnet sind, und mit Einrichtungen zum Zu- und Abführen des Verstärkungsmaterials mit einstellbarer Geschwindigkeit, gekennzeichnet durch eine in Laufrichtung des Verstärkungsmaterials (1) nach dem Bad (2) angeordnete Kammer (6) mit einer Mehrzahl von in zwei Ebenen übereinander angeordneten Führungswalzen (11) und mit einer Umwälzeinrichtung (7) für erwärmte Luft und durch eine hinter der Kammer angeordnete Walkstrecke (14) und daran anschliessende Zusammenführungs-Station.

5. Vorrichtung nach Anspruch 3, dadurch gekennzeichnet, dass die Führungswalzen (11) am Umfang verteilte achsparallele Nuten (12) aufweisen.

**Claims**

1. A method of impregnating reinforcing materials, such as rovings, fleeces, ribbons or woven fabrics, with a resinous binding agent for the production of fibre-reinforced materials, in which the reinforcing material is conducted on one side over a rotary impregnating roller immersed partially into a bath of binding agent and in so doing is given an excess of binding agent, characterised in that the reinforcing material coming from the impregnating roller with an excess of binding agent of 20 to 40 percent by weight is conducted through a binding agent absorption zone in which, to maintain a specific viscosity of the binding agent, neated air is circulated and in which the reinforcing material is deflected by a plurality of guide rollers lying in two planes above one another, and in that after leaving the binding agent absorption zone the reinforcing material is conducted by way of a filling station in which surplus binding agent drains off.

2. A method according to claim 1, characterised in that, with use of glass fibre rovings of 600 to 2400 tex and a diameter of 5 to 15 µm, as binding agent a warm-hardening or hot-hardening resin hardener system is applied and the sojourn time in the binding agent absorption zone amounts to 30 up to 120 seconds at a temperature of 30 to 150 °C.

3. A method according to claim 1, characterised in that after emerging from the binding agent absorption zone the completely-impregnated reinforcing material is deflected out of the horizontal position into a vertical position.

4. Apparatus for carrying out the method according to one of the preceding claims having a vat for the binding agent bath with a rotary impregnating roller which dips by its lower part into the bath and with which inlet and outlet means are associated, and having mechanisms for the feeding and carrying away of the reinforcing material at an adjustable speed, characterised by a chamber (6) arranged in the direction of travel of the reinforcing material (1) after the bath (2) and having a plurality of guide rollers (11) arranged in two planes one above the other and a circulating mechanism (7) for heated air and by a filling section (14) arranged behind the chamber, and a bringing-together station linking thereto.

5. Apparatus according to claim 3, characterised in that the guide rollers (11) have paraxial grooves (12) distributed on the circumference.

## Revendications

1. Procédé d'imprégantion de matériaux de renforcement tels que stratifiés, voiles, bandes ou tissus par un liant sous forme de résine pour la réalisation de matériaux renforcés de fibres, dans lequel on fait passer unilatéralement le matériau de renforcement sur un rouleau d'imprégnation plongeant partiellement dans un bain de liant et obtient ainsi un excès de liant, caractérisé par le fait qu'on fait traverser au matériau de renforcement venant du rouleau d'imprégnation avec un excès de liant de 20 à 40% en poids une zone d'absorption de liant dans laquelle de l'air chauffé pour maintenir une viscosité déterminé du liant est mis en circulation et le matériau de renforcement est changé de direction par plusieurs rouleaux de guidage placés les uns au-dessus des autres dans deux plans et qu'au sortir de ladite zone d'absorption de liant on fait passer le matériau de renforcement sur une ligne de foulonnage dans laquelle le liant en excès s'égoutte.

2. Procédé selon la revendication 1, caractérisé par le fait qu'avec utilisation de stratifils de silionne au titre de 600 à 2400 tex et d'un diamètre de 5 à 15 μm on applique comme liant un système de résine et de durcisseur durcissant à régime chaud ou très chaud et règle la durée de séjour dans la zone d'absorption de liant à 30 à 120 secondes à une température de 30 à 150°C.

3. Procédé selon la revendication 1, caractérisé par le fait qu'après sa sortie de la zone d'absorption du liant on fait passer le matériau de renforcement de la position horizontale à une position verticale.

4. Dispositif de mise en œuvre du procédé selon l'une quelconque des revendications 1 à 3, muni d'une cuve pour le bain de liant avec un rouleau d'imprégnation rotatif plongeant dans ledit bain et des moyens d'écoulement d'entrée et de sortie et de dispositifs d'amenée et d'évacuation du matériau de renforcement à une vitesse réglable, caractérisé par le fait qu'il comporte, vue en direction de marche du matériau de renforcement (1), après le bain (2) une chambre (6) munie de plusieurs rouleaux de guidage (11) disposés les uns au-dessus des autres dans deux plans et d'un dispositif de circulation (7) pour de l'air chauffé et une ligne de foulonnage (14) placée derrière ladite chambre ainsi qu'une station de rassemblement faisant suite à cette même ligne.

5. Dispositif selon la revendication 4, caractérisé par le fait que les rouleaux de guidage (11) présentent des rainures (12) parallèles à l'axe réparties sur leur pourtour.